# EUROPEAN PATENT SPECIFICATION

(11) **EP 1 222 518 B1**
(45) Date of publication and mention of the grant of the patent: **19.05.2004**
(21) Application number: 00968118.0
(22) Date of filing: 16.10.2000
(51) Int. Cl.: G06F 3/00, H04M 3/56, H04Q 7/38, G06F 3/033

(54) **PERSONAL MOBILE COMMUNICATION DEVICE**
PERSÖNLICHES MOBILES KOMMUNIKATIONSGERÄT
DISPOSITIF DE COMMUNICATION PERSONNEL MOBILE

(30) Priority: 18.10.1999 EP 99308195
(43) Date of publication of application: 17.07.2002
(73) Proprietor: BRITISH TELECOMMUNICATIONS public limited company, London EC1A 7AJ (GB)
(72) Inventor: BOWSKILL, Jeremy, Michael, Woodbridge, Suffolk IP12 4RR (GB); LOFFLER, Alexander, Ipswich, Suffolk IP4 5RZ (GB); POLAINE, Matthew, John, Cambridge, Cambs CB1 3LF (GB); PATMORE, Jeffrey, Joseph, Witham, Essex CM8 2NT (GB)
(74) Representative: Nash, Roger William
(86) International application number: PCT/GB2000/003970
(87) International publication number: WO 2001/029642

(56) References cited:
- EP-A- 0 453 128
- WO-A-98/25423
- US-A- 5 570 301
- US-A- 5 907 604
- COLOMBO C ET AL: "PROTOTYPE OF A VISION-BASED GAZE-DRIVEN MAN-MACHINE INTERFACE" PROCEEDINGS OF THE IEEE/RSJ INTERNATIONAL CONFERENCE ON INTELLIGENT ROBOTS AND SYSTEMS (IROS),US,LOS ALAMITOS, IEEE COMP. SOC. PRESS, 1995, pages 188-192, XP000740890 ISBN: 0-7803-3006-4

## Description

This invention relates to a device in which the user interface of a mobile personal device is modified according to physical and location context. In particular this invention relates to a mobile teleconferencing device.

It is known from European patent application EP-A-0 580 397 to provide a conferencing facility comprising a plurality of interface devices for displaying, in addition to a representation of one or more conference participants, further information comprising constant and variable conferencing parameters such a names of conference participants and conferencing parameters that can change during a conference, such as reactions of conference participants to a conference event. Individuals at a plurality of locations remote from each other, and accessing the facility using different types of access device, may thereby interact with each other in a manner which emulates a conventional meeting.

However, while participants in a conference may receive information relating to conference-related events and the reactions of conference participants, little account is taken of the physical circumstances in which a conference participant is currently monitoring the conference proceedings.

According to a first aspect of the present invention there is provided a mobile interface device for accessing a computer, comprising:
a user interface having visual display means and audio output means; and
a physical detector for detecting attributes indicative of the physical context of a user of the device;
wherein the user interface is responsive to an output of the physical detector in respect of said user to make a corresponding adjustment to output by the visual display means and/or the audio output means.

In a preferred embodiment the user interface is responsive to an output of the physical detector indicating that said user is not substantially stationary, to inhibit output by the visual display means.

In further preferred embodiments, the physical detector further comprises means to detect location attributes of said user and, for example, the physical detector is arranged to detect when said user is located within a building.

Preferably the output of the audio output device is dependent upon the location attributes of the user, and preferably the output of the visual display device is dependent upon the location attributes of the user.

Preferably, the mobile interface device further comprises means to transmit, in use, an output by the physical detector to the computer being accessed.

According to a second aspect of the present invention there is provided a teleconferencing apparatus comprising a plurality of interface devices, at least one of said plurality of interface devices being a mobile interface device comprising:
a user interface having visual display means and audio output means; and
a physical detector for detecting attributes indicative of the physical context of a user of the device;
wherein the user interface is responsive to an output of the physical detector in respect of said user to make a corresponding adjustment to output by the visual display means and/or the audio output means.

Preferably the mobile interface device further comprises means to transmit, in use, an output by the physical detector.

In a preferred embodiment of the teleconferencing apparatus according to this second aspect of the present invention, the teleconferencing apparatus further comprises display control means arranged, in use, to output a representation of users of a teleconference to said plurality of interface devices, the display control means being responsive to a received output by the physical detector of said mobile interface device to make a corresponding adjustment to the respective representation of the teleconference user using said mobile interface device for output to said plurality of interface devices. Such adjustments preferably indicate whether the user of said mobile interface device is moving or indicate the degree of privacy available to the user of the mobile interface device.

Preferred embodiments of the present invention will now be described by way of example only with reference to the accompanying drawings, of which:
Figure 1 shows a network with human/machine interface units serving teleconference users via respective client apparatuses;
Figure 2 is a representation of a teleconference as displayed on an interface unit of Figure 1;
Figure 3a is a block diagram showing a client apparatus of Figure 1 which incorporates a physical and location sensor;
Figure 3b is a functional block diagram showing the logical operation of the apparatus shown in Figure 3a; and
Figures 4 to 7 are examples of representations of a user as shown on an interface unit of Figure 1, in which the representation of the user is dependent upon location and physical data collected using the apparatus shown in Figure 3a.

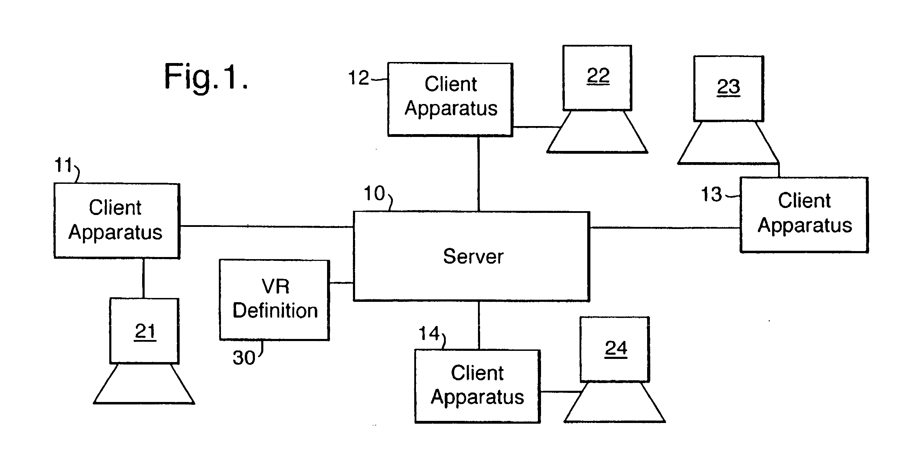

Figure 1 shows a network serving four users 1, 2, 3, 4 (not shown) allowing them to interact in a virtual teleconference. Each user has a respective human/machine interface unit 21, 22, 23, 24, which includes video and/or audio equipment for the user to see and/or hear what is happening in the virtual meeting space. The interface unit includes user input devices (e.g. audio input, keyboard or keypad, computer "mouse" etc.) to enable the user to provide input to the virtual meeting space. Each interface unit, 21, 22, 23, 24 is connected to a respective client apparatus 11, 12, 13, 14 which provides an interface between the user and a main server 10 which controls the operation of the meeting space. The server 10 has, as a further input, a virtual reality (VR) definition store 30 which maintains permanent data defining the virtual meeting space (also referred to as the meeting space definition unit in the specification). The control of the meeting space is carried out by interaction between the client apparatuses 11, 12, 13, 14 and the server 10. The display control functions may take place in the server 10, or the display control functions may be distributed in the client apparatus 11, 12, 13, 14, depending on the functionality available in the client apparatus. Links between the client apparatus 11, 12, 13, 14 and the server 10 may be permanent hard-wired connections, virtual connections (permanent as perceived by the user, but provided over shared lines by the telecommunications provider), or dial-up connections (available on demand, and provided on a pay-per-use basis), and may include radio links, for example to a mobile device. The server 10 may have, in addition to the server functionality, similar functionality to the client apparatus 11, 12, 13, 14, but as shown the server 10 is dedicated to the server function only.

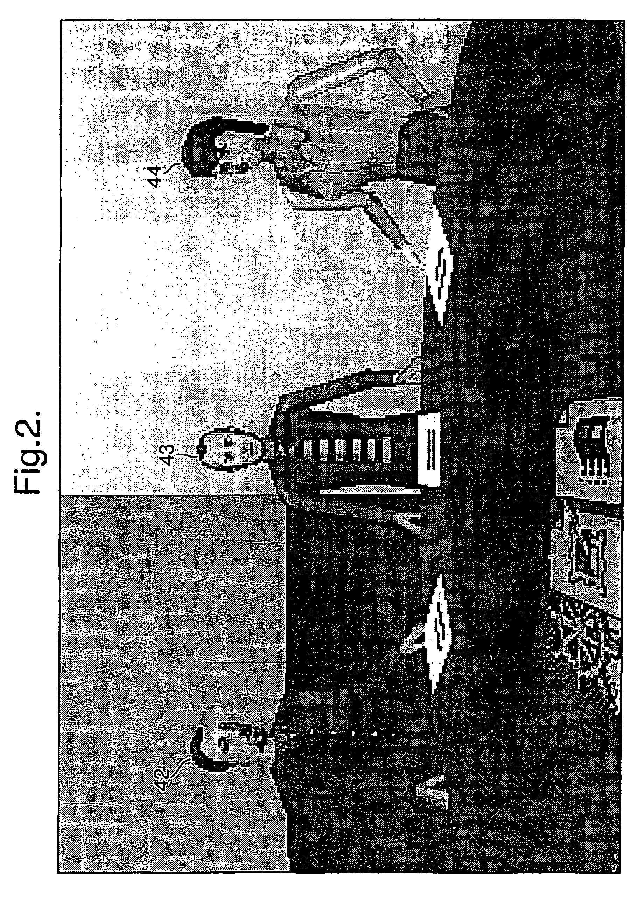

An example of an image representing a meeting space as it appears on a display device is shown in Figure 2. In this example, users 2, 3 and 4 are represented by avatars 42, 43 and 44 respectively.

Referring again to Figure 1, in response to inputs from one of the users (e.g. user 1) through his respective user interface 21 the client apparatus 11 transmits these inputs to the main server 10 which, in accordance with the meeting space definition unit 30, controls the images to be represented on the other users' screens in the human machine interface units 22, 23, 24 to represent the activities of the user 1, input through interface device 21. As a very simple example, the actions of the user 1 when first establishing contact with the meeting space are translated by the client apparatus 11 and converted by the server 10, into a representation of the user 1 entering the meeting space, which is in turn passed to the individual clients 12, 13, 14 to be represented as the avatar of the user 1 moving into the field of view of the display devices 22, 23, 24.

The manner of representation of the individual user 1 in the virtual space, for example the appearance of the avatar in terms of age, sex, hair colour etc may be selected either by the user 1 through his respective client device 11, or by each receiving user 2, 3, 4 in the meeting space, who may each select an avatar according to his own requirements to represent the user 1. Similarly, some parts of the virtual meeting space may be defined centrally in the meeting space definition unit 30, whereas other aspects may be defined by each individual client apparatus 11, 12, 13, 14 independently of the others. Such definitions may include colour schemes, the relative locations in the virtual meeting space of the individual users 1, 2, 3, 4, etc.

The client apparatus 11 is a mobile device, and in the embodiment of the invention described here the mobile device 11 is a wireless palmtop computer. In this specification the term mobile device is intended to refer to all computing devices which may be carried around or worn by a user, and may be used whilst the user is moving around and active in other tasks. Mobile devices are distinguished from portable devices which are carried to a location and then used whilst the user is stationary.

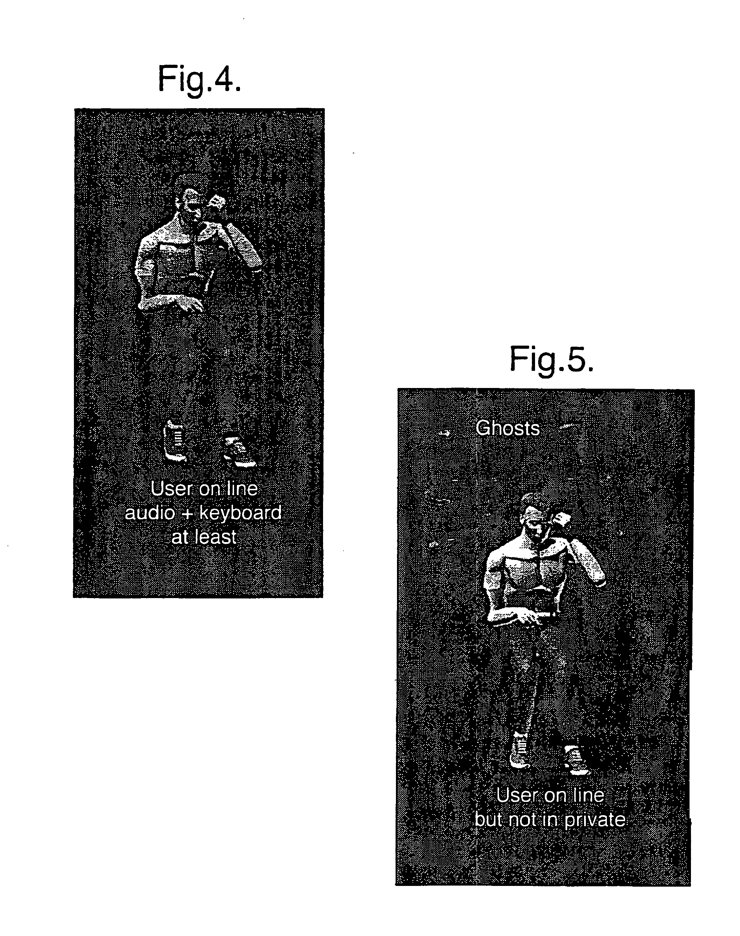

However, a mobile device may or may not have visual display capabilities. Even if the device does have such capabilities, the user 1 may be walking or running or otherwise distracted, and may not be able to attend to a visual display. The representation of the user 1 is displayed to the other users 2, 3, 4 as shown in Figure 4, so that the other users are aware that user 1 is on line, but that the user 1 may not have a visual link to the teleconference.

For users using a mobile device there are other aspects of the service to consider beside the fact that the client device 11 may not have as sophisticated input and output capabilities as other client devices 12, 13, 14 . Privacy may be an issue. It is possible that other people might move in and out of the user's proximity during a conversation. In order to make the other users in a conference aware of potential privacy issues the user's avatar is changed as shown in Figure 5 to indicate that the user is on line, but that the user may not be in private. The user 1 can indicate that there is a privacy issue manually, by transmitting a signal via the client 11 to the server 10 using a predetermined key or sequence of keys. The device 11 has an audio input, and as an alternative to using a manually entered key or sequence of keys to indicate the user is not in private, the received audio signal is analysed, using known speaker recognition algorithms, to determine whether speech other than that from the user is detected. The device 11 may also be equipped with a video input, in which case the video signal received via the video input can be analysed using known image classification algorithms, for example to detect wether there is skin detected in the captured image, or to detect the number of faces in the captured image. The results of such image classification may then be used to indicate to the server 10 that the user is not in private and the user's avatar is modified accordingly.

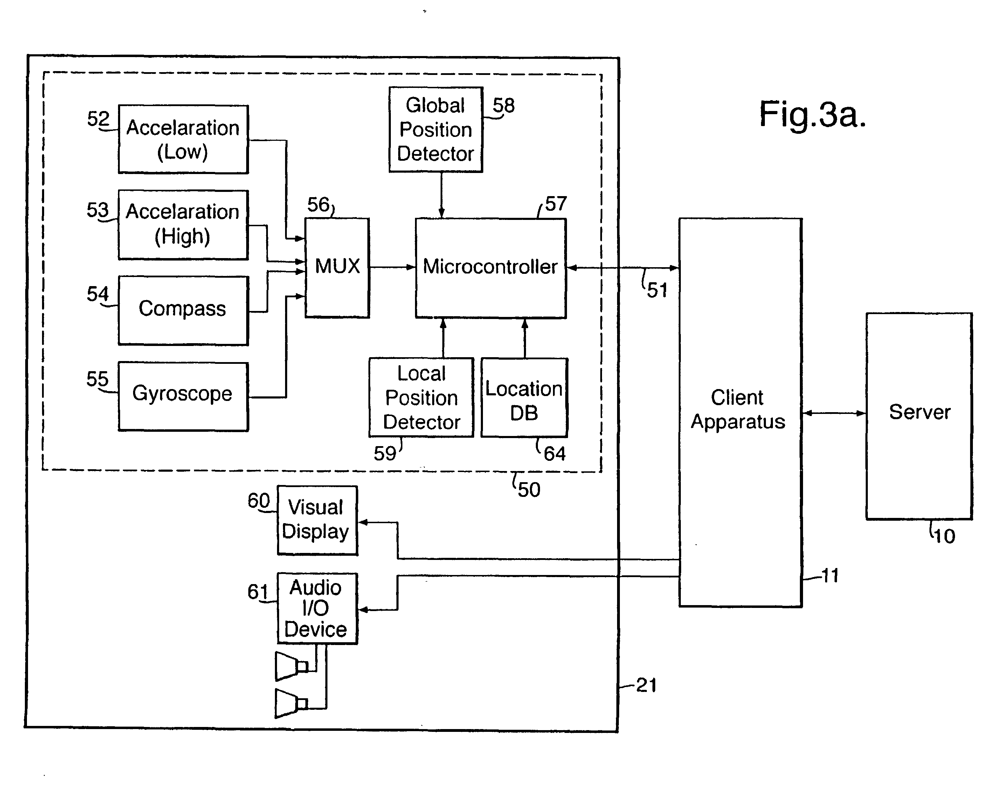

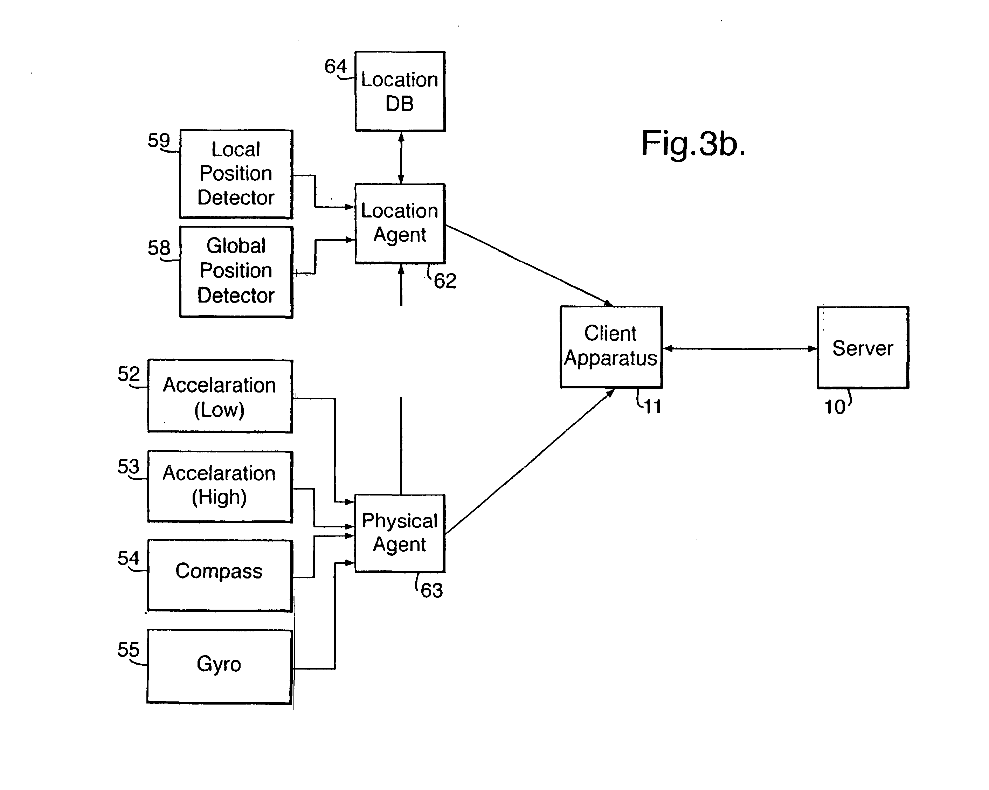

For a mobile user, the attention paid to the virtual meeting space varies in dependence upon the 'real world' task currently being carried out. For example, whilst travelling on a train a user may be required to show a ticket to the ticket inspector, or somebody may speak to the user to ask the time. If the user is walking, running, or unable to remain still for some reason, then the attention paid to the virtual meeting space will be more limited than otherwise. If the user is in a noisy environment, again, the attention paid to the virtual meeting space will be less than it would be in a very quiet environment. Detection of a user's physical and location attributes is discussed in more detail with reference to Figure 3a and 3b.

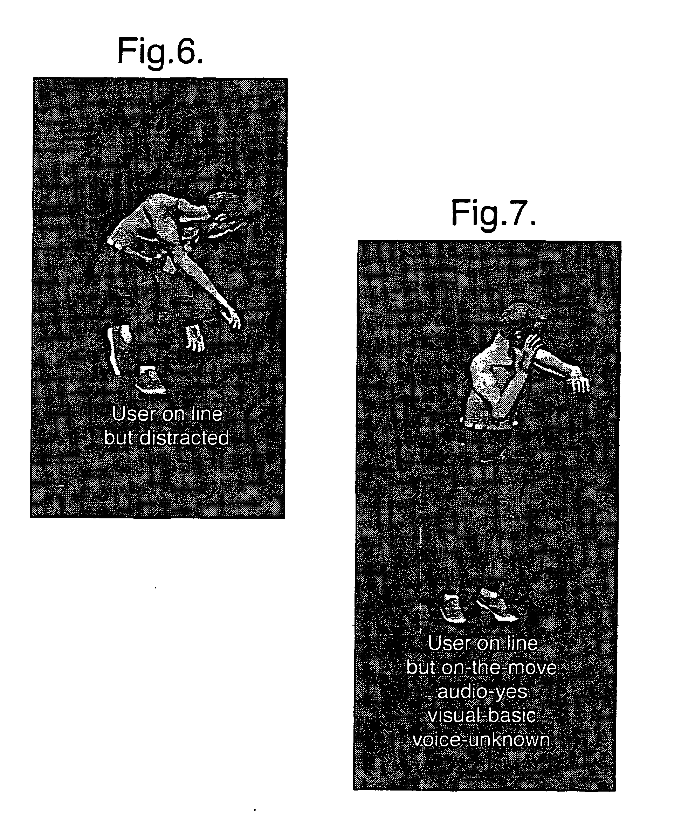

The audio environment is analysed using the audio signal received via the audio input on the client apparatus 11. It is also possible for the user to use a predetermined key or sequence of keys to indicate via the client apparatus 11 to the server 10 that he is distracted or on the move. Figure 6 shows a representation of a user who is on-line but distracted, and Figure 7 shows a representation of a user who is on line but on the move.
The user interface unit 21 includes a physical and location sensor 50 as shown in Figure 3α, as well as a visual display 60 and an audio input/output device 61. The physical and location sensor 50 is connected to the client apparatus 11 by a serial interface 51. A low acceleration detector 52 measures acceleration of a low force in two directions using an ADXL202. A high acceleration detector 53 measures acceleration of a high force in three directions using an ACH04-08-05 available from Measurement Specialities Incorporated (which can be referenced via Universal Resource Locator (URL) http://www.msiusa.com on the Intemet). A direction detector 54 is provided using a compass which gives an absolute measurement of orientation of the client apparatus. A HMC2003, available from Honeywell (URL http://www.ssechoneywell.com), is used. The compass is a three-axis magnetometer sensitive to fields along the length, width and height of the device. A direction and velocity detector 55 is provided using an ENC Piezoelectric Vibrating Gyroscope (part number S42E-2 which is sold under the registered trademark GYROSTAR) available from Murata manufacturing Company Ltd. (URL http://www.murata.com). The gyroscope measures angular velocity, giving speed and direction in two directions in each axis of rotation (i. e. six measurements are provided). The acceleration detectors 52, 53, the direction detector 54 and the velocity and direction detector 55 are connected via a multiplexer (MUX) 56 to a microcontroller 57 where the outputs are analysed as will be described later.

A global position detector 58 is provided which measures the absolute location of the device using a Global Positioning System (GPS) receiver which receives signal from GPS satellites.

GPS provides specially coded satellite signals that can be processed in a GPS receiver, enabling the receiver to compute position, velocity and time. The nominal GPS Operational Constellation consists of 24 satellites that orbit the earth twice a day, 11,000 miles above the earth. (There are often more than 24 operational satellites as new ones are launched to replace older satellites.) The satellite orbits repeat almost the same ground track (as the earth turns beneath them) once each day. There are six orbital planes (with nominally four satellites in each), equally spaced (60 degrees apart), and inclined at about fifty-five degrees with respect to the equatorial plane. This constellation provides the user with from five to eight satellites visible from any point on the earth. The GPS satellites orbit the earth transmitting their precise position and elevation. A GPS receiver acquires the signal, then measures the interval between transmission and receipt of the signal to determine the distance between the receiver and the satellite. Once the receiver has calculated this data for at least 3 satellites, its location on the earth's surface can be determined.

The receiver used in this embodiment of the invention is a Garmin GPS35 unit (available, for example from Lowe Electronics Ltd in the UK). GPS signals do not propagate inside buildings so a local position detector 59 is also provided which uses local area beacons (LAB's) (not shown) which use low power 418MHz AM radio transmitters (such as the CR91Y, CR72P, CR73Q or CR74R from RF Solutions) at known locations within a building. Radio or infrared transmitters could be used, although radio provides a more robust solution since line of sight connections are not required.

Once the "Bluetooth" radio based system becomes available this will also provide a suitable solution. Bluetooth is a standard for wireless connectivity, designed to replace cables between portable consumer devices such as cellular phones, laptop computers, personal digital assistants, digital cameras, and many other products. The Bluetooth version 1.0 specification was agreed in July 1999, and the first products are expected on the market in mid 2000.

Software on the microcontroller 57 gathers sensor data from the detectors 52, 53, 54, 55, via the MUX 56 which is configured to read each device in turn via an analogue port. The output from the global position detector 58 is read via a serial port connection and the output from the local position detector 59 is connected to a digital input on the microcontroller 57. Also provided is a location database 64 which is accessed by the microcontroller 57 to determine location names.
Figure 3b is a functional block diagram showing the logical operation of the physical and location detector 50. A location agent 62, implemented in software on the microcontroller 57, uses location data gathered by the global position detector 58 and the local position detector 59, analyses this data and makes the analysis available to the client apparatus 11. The location agent 62 also receives information about velocity and direction, measured by the direction detector 54 and the velocity and direction detector 55, from a physical agent 63. The physical agent is also implemented in software in the microcontroller 57.

The location agent determines whether GPS is available, and whether the global location measured by the global position detector 58 is based on a signal from three or more satellites. The local position detector 59 detects signals from LAB's, each of which has a unique identifier. The location agent 62 accesses the location database 64 to determine a location name associated with a received LAB identifier. The location agent 62 must be able to determine the following:
- Is the device inside or outside? If less than three GPS signals are received then the device is determined to be inside.
- Is the device moving? A measured velocity from the global position detector 58 (if the device is outside) and velocity measured via the physical agent 63 are used to determine whether the device is moving.
- Location of the device. Latitude and longitude, if the device is outside, are measured via the global position detector 58 and/or a location name is determined using the local position detector 59 and the location database 64.
- Direction of movement. This may be determined by the global position detector and /or by direction data received from the physical agent.

The physical agent 63 analyses physical sensor data and makes this available to the location agent 62. The physical agent is used to determine the following user attributes.
- Standing.
- Walking.
- Sitting.
- Cadence (velocity).
- Acceleration.
- Shock.

The complex nature of the physical data makes the use of simple rules unreliable. The physical agent 63 of this embodiment of the invention uses Hidden Markov Models (HMM) to provide a determination above based on the inputs from the detectors 52, 53, 54, 55, 56. A good description of an implementation of HMM's (as applied to speech recognition, but the principles are the same) may be found in "Hidden Markov Models for Automatic Speech Recognition: Theory and Application" S.J. Cox, British Telecom Technology Journal Vol. 6, No. 2, April 1988. In other embodiments of the invention it is possible for the physical agent to analyse visual and audio information received from the visual and audio input/output device provided as part of the interface unit 21.

The client apparatus 11 has the physical information made available to it via the physical agent 63, and the location information made available to it via the location agent 62. Audio and/or visual information is used on the mobile device to provide the user with information alerts, and for teleconferencing activity. Spatial audio is also used for information alerts and for spatialised teleconferencing, which appears more natural to the user.

The interface used by the device for information alerts, and the interface used for teleconferencing are dependent on the user's current location and physical context (i. e. is the user standing/ walking/sitting etc). If the user is unlikely to be able to attend to a visual display, an audio interface is used. If the user is likely to be unavailable (eg running) then the device could divert alerts to a messaging service, which could then alert the user when it is determined he is available again. In embodiments of the invention incorporating audio input and analysis it is also possible to configure the audio output on the user's wearable or handheld device to match the acoustics, ambient noise level etc of the real world space in which the user is located. The nature of the interface used (for example the sound of a mobile device's alert or 'ring-tone') can be modified according to the detected user location. For example, a mobile phone handset could use a ring-tone such as a voice saying "shop at the Harrods' sale" if it is determined by the location agent 62 that the user is walking along Knightsbridge (where the famous shop 'Harrods' is located). A phone could use an appropriate piece of music if it is determined by the location agent 62 that the user is in church. Similarly to changing the users' audio interface in dependence on the detected location, the visual display can be altered according to the determined location. The screen style of the visual interface can be made to reflect the theme of the location. For example if the user is viewing web pages, and is walking around a museum, the web pages viewed as the user moves to different locations change to reflect the area of the museum.

## Claims

1. A mobile interface device for accessing a computer (10), comprising:
a user interface (11, 21) having visual display means (60) and audio output means (61); and
a physical detector (50) for detecting attributes indicative of the physical context of a user of the device;
wherein the user interface (11) is responsive to an output (51) of the physical detector (50) in respect of said user to make a corresponding adjustment to output by the visual display means (60) and/or the audio output means (61).

2. A mobile interface device according to Claim 1, wherein the user interface (11, 21) is responsive to an output of the physical detector (50) indicating that said user is not substantially stationary, to inhibit output by the visual display means (60).

3. A mobile interface device according to Claim 1 or Claim 2, wherein the user interface (11, 21) is responsive to an output (51) by the physical detector (50) indicative of ambient noise in the vicinity of said user, to make a compensatory adjustment to output by the audio output means (61).

4. A mobile interface device according to any one of claims 1 to 3, wherein the physical detector (50) further comprises means (57, 58, 59) to detect location attributes of said user.

5. A mobile interface device according to Claim 4, wherein the physical detector (50) is arranged to detect when said user is located within a building.

6. A mobile interface device according to Claim 4 or Claim 5, including a store (64) for storing predetermined information corresponding to one or more location attributes detectable by the physical detector (50), and wherein the user interface (11, 21) is arranged to adjust output by the visual display means (60) and/or the audio output means (61) in dependence upon an output (51) by the physical detector (50) relating to location of said user and to corresponding information stored in said store (64).

7. A mobile interface device according to Claim 6, wherein said predetermined information identifies a corresponding location type and wherein the user interface (11, 21) is responsive to an identified location type to output a corresponding alert at the audio output means (61).

8. A mobile interface device according to any one of the preceding claims, further comprising means to transmit, in use, an output (51) by the physical detector (50) to the computer (10) being accessed.

9. A mobile interface device according to any one of the preceding claims, arranged for use in accessing a teleconferencing facility, wherein the computer (10) comprises at least a part of said teleconferencing facility.

10. A teleconferencing apparatus comprising a plurality of interface devices, at least one of said plurality of interface devices being a mobile interface device comprising:
a user interface (11, 21) having visual display means (60) and audio output means (61); and
a physical detector (50) for detecting attributes indicative of the physical context of a user of the device;
wherein the user interface (11) is responsive to an output (51) of the physical detector (50) in respect of said user to make a corresponding adjustment to output by the visual display means (60) and/or the audio output means (61).

11. A teleconferencing apparatus according to Claim 10, wherein said mobile interface device further comprises means to transmit, in use, an output (51) by the physical detector (50).

12. A teleconferencing apparatus according to Claim 11, further comprising display control means arranged, in use, to output a representation of users of a teleconference to said plurality of interface devices (21,22,23,24), the display control means being responsive to a received output (51) by the physical detector (50) of said mobile interface device to make a corresponding adjustment to the respective representation of the teleconference user using said mobile interface device for output to said plurality of interface devices.

13. A teleconferencing apparatus according to Claim 12, wherein the display control means are arranged to make an adjustment to the respective representation to indicate whether said user of said mobile interface device is moving.

14. A teleconferencing apparatus according to Claim 12, wherein the display control means are arranged to make an adjustment to the respective representation to indicate the degree of privacy available to said user of said mobile interface device.

## Patentansprüche

1. Mobile Schnittstellenvorrichtung zum Zugriff auf einen Computer (10), die umfaßt:
- eine Benutzerschnittstelle (11, 21), die eine visuelle Anzeigeneinrichtung (60) und eine Audio-Ausgabeeinrichtung (61) aufweist, und
- einen Körper-Detektor (50) zur Erfassung von Attributen, die die physische Umgebung eines Benutzers der Vorrichtung anzeigen,
wobei die Benutzerschnittstelle (11) auf eine Ausgabe (51) des Körper-Detektors (50) in Bezug auf den Benutzer anspricht, um eine entsprechende Einstellung der Ausgabe durch die visuelle Anzeigeneinrichtung (60) und/oder die Audio-Ausgabeeinrichtung (61) vorzunehmen.

2. Mobile Schnittstellenvorrichtung nach Anspruch 1, wobei die Benutzerschnittstelle (11, 21) auf eine Ausgabe des Körper-Detektors (50) anspricht, die anzeigt, daß sich der Benutzer im wesentlichen nicht stationär an einem Ort befindet, um eine Ausgabe durch die visuelle Anzeigeneinrichtung (60) zu sperren.

3. Mobile Schnittstellenvorrichtung nach Anspruch 1 oder 2, wobei die Benutzerschnittstelle ( 11, 21) auf eine Ausgabe (51) vom Körper-Detektor (50) anspricht, die Geräusche aus der Umgebung in der Nähe des Benutzers anzeigt, um für die Ausgabe durch die Audio-Ausgabeeinrichtung (61) eine ausgleichende Einstellung vorzunehmen.

4. Mobile Schnittstellenvorrichtung nach einem der Ansprüche 1 bis 3, wobei der Körper-Detektor (50) ferner eine Einrichtung (57, 58, 59) zur Erfassung von Standortattributen des Benutzers umfaßt.

5. Mobile Schnittstellenvorrichtung nach Anspruch 4, wobei der Körper-Detektor (50) so ausgeführt ist, daß er erfaßt, wenn der Benutzer in einem Gebäude lokalisiert wurde.

6. Mobile Schnittstellenvorrichtung nach Anspruch 4 oder 5, die enthält: einen Speicher (64) zur Speicherung einer vorgegebenen Information, die einem oder mehreren Standortattributen entspricht, die vom Körper-Detektor (50) erfaßt werden können, und wobei die Benutzerschnittstelle (11, 21) so ausgeführt ist, daß sie die Ausgabe durch die visuelle Anzeigeneinrichtung (60) und/oder die Audio-Ausgabeeinrichtung (61) in Abhängigkeit von einer Ausgabe (51) des Körper-Detektors (50) einstellt, der sich auf den Standort des Benutzers und auf eine entsprechende, im Speicher (64) gespeicherte Information bezieht.

7. Mobile Schnittstellenvorrichtung nach Anspruch 6, wobei die vorgegebene Information einen entsprechenden Standorttyp identifiziert und die Benutzerschnittstelle (11, 21) auf einen identifizierten Standorttyp anspricht und eine entsprechende Warnung an die Audio-Ausgabeeinrichtung (61) ausgibt.

8. Mobile Schnittstellenvorrichtung nach einem der vorhergehenden Ansprüche, die ferner eine Einrichtung umfaßt, die im Betrieb eine Ausgabe (51) vom Körper-Detektor (50) zum Computer (10) überträgt, auf den zugegriffen wird.

9. Mobile Schnittstellenvorrichtung nach einem der vorhergehenden Ansprüche, die für eine Verwendung im Zugriff auf eine Telekonferenzeinrichtung ausgeführt ist, wobei der Computer (10) mindestens einen Teil der Telekonferenzeinrichtung umfaßt.

10. Telekonferenzapparat, der mehrere Schnittstellenvorrichtungen umfaßt, von denen mindestens eine der mehreren Schnittstellenvorrichtungen eine mobile Schnittstellenvorrichtung ist, die umfaßt:
- eine Benutzerschnittstelle (11, 21), die eine visuelle Anzeigeneinrichtung (60) und eine Audio-Ausgabeeinrichtung (61) aufweist, und
- einen Körper-Detektor (50) zur Erfassung von Attributen, die die physische Umgebung eines Benutzers der Vorrichtung anzeigen,
wobei die Benutzerschnittstelle (11) auf eine Ausgabe (51) des Körper-Detektors (50) in Bezug auf den Benutzer anspricht, um eine entsprechende Einstellung der Ausgabe durch die visuelle Anzeigeneinrichtung (60) und/oder die Audio-Ausgabeeinrichtung (61) vorzunehmen.

11. Telekonferenzapparat nach Anspruch 10, wobei die mobile Schnittstellenvorrichtung ferner eine Einrichtung umfaßt, die im Betrieb eine Ausgabe (51) vom Körper-Detektor (50) überträgt.

12. Telekonferenzapparat nach Anspruch 11, der ferner eine Anzeigensteuereinrichtung umfaßt, die ausgeführt ist, um im Betrieb eine Darstellung der Teilnehmer einer Telekonferenz an die mehreren Schnittstellenvorrichtungen (21, 22, 23, 24) auszugeben, wobei die Anzeigensteuereinrichtung auf eine vom Körper-Detektor (50) empfangene Ausgabe (51) der mobilen Schnittstellenvorrichtung anspricht, um eine entsprechende Einstellung der jeweiligen Darstellung des Telekonferenzteilnehmers vorzunehmen, der die mobile Schnittstellenvorrichtung für die Ausgabe an die mehreren Schnittstellenvorrichtungen verwendet.

13. Telekonferenzapparat nach Anspruch 12, wobei die Anzeigensteuereinrichtungen so ausgeführt sind, daß sie eine Einstellung der jeweiligen Darstellung vornehmen, um anzuzeigen, ob sich der Benutzer der mobilen Schnittstellenvorrichtung in Bewegung befindet.

14. Telekonferenzapparat nach Anspruch 12, wobei die Anzeigensteuereinrichtungen so ausgeführt sind, daß sie eine Einstellung der jeweiligen Darstellung vornehmen, um den Grad der dem Benutzer der mobilen Schnittstellenvorrichtung verfügbaren Geheimhaltung anzuzeigen.

## Revendications

1. Dispositif d'interface mobile destiné à accéder à un ordinateur (10), comprenant :
une interface d'utilisateur (11, 21) comportant un moyen d'affichage visuel (60) et un moyen de sortie audio (61), et
un détecteur physique (50) destiné à détecter des attributs indicatifs du contexte physique d'un utilisateur du dispositif,
dans lequel l'interface d'utilisateur (11) répond à une sortie (51) du détecteur physique (50) en ce qui concerne ledit utilisateur pour effectuer un réglage correspondant pour une sortie par le moyen d'affichage visuel (60) et/ou le moyen de sortie audio (61).

2. Dispositif d'interface mobile selon la revendication 1, dans lequel l'interface d'utilisateur (11, 21) répond à une sortie du détecteur physique (50) indiquant que ledit utilisateur n'est pas globalement immobile, pour inhiber une sortie par le moyen d'affichage visuel (60).

3. Dispositif d'interface mobile selon la revendication 1 ou la revendication 2, dans lequel l'interface d'utilisateur (11, 21) répond à une sortie (51) par le détecteur physique (50) indicative d'un bruit ambiant au voisinage dudit utilisateur, pour effectuer un réglage de compensation à une sortie par le moyen de sortie audio (61).

4. Dispositif d'interface mobile selon l'une quelconque des revendications 1 à 3, dans lequel le détecteur physique (50) comprend en outre un moyen (57, 58, 59) pour détecter les attributs d'emplacement dudit utilisateur.

5. Dispositif d'interface mobile selon la revendication 4, dans lequel le détecteur physique (50) est agencé de manière à détecter quand ledit utilisateur est situé à l'intérieur d'un immeuble.

6. Dispositif d'interface mobile selon la revendication 4 ou la revendication 5, comprenant une mémoire (64) destinée à mémoriser des informations prédéterminées correspondant à un ou plusieurs attributs d'emplacement détectables par le détecteur physique (50) et où l'interface d'utilisateur (11, 21) est agencée pour régler une sortie par le moyen d'affichage visuel (60) et/ou le moyen de sortie audio (61) selon une sortie (51) par le détecteur physique (50) se rapportant à l'emplacement dudit utilisateur et à des informations correspondantes mémorisées dans ladite mémoire (64).

7. Dispositif d'interface mobile selon la revendication 6, dans lequel lesdites informations prédéterminées identifient un type d'emplacement correspondant et où l'interface d'utilisateur (11, 21) répond à un type d'emplacement identifié pour fournir en sortie une alerte correspondante au moyen de sortie audio (61).

8. Dispositif d'interface mobile selon l'une quelconque des revendications précédentes, comprenant en outre un moyen pour transmettre, en utilisation, une sortie (51) par le détecteur physique (50) à l'ordinateur (10) auquel on accède.

9. Dispositif d'interface mobile selon l'une quelconque des revendications précédentes, agencé pour une utilisation lors d'un accès à un équipement de téléconférence, où l'ordinateur (10) comprend au moins une partie dudit équipement de téléconférence.

10. Ensemble de téléconférence comprenant une pluralité de dispositifs d'interface, au moins un dispositif parmi ladite pluralité de dispositifs d'interface étant un dispositif d'interface mobile comprenant :
une interface d'utilisateur (11, 21) comportant un moyen d'affichage visuel (60) et un moyen de sortie audio (61), et
un détecteur physique (50) destiné à détecter des attributs indicatifs du contexte physique d'un utilisateur du dispositif,
où l'interface d'utilisateur (11) répond à une sortie (51) du détecteur physique (50) en ce qui concerne ledit utilisateur pour effectuer un réglage correspondant pour une sortie par le moyen d'affichage visuel (60) et/ou le moyen de sortie audio (61).

11. Ensemble de téléconférence selon la revendication 10, dans lequel ledit dispositif d'interface mobile comprend en outre un moyen destiné à transmettre, en utilisation, une sortie (51) par le détecteur physique (50).

12. Ensemble de téléconférence selon la revendication 11, comprenant en outre un moyen de commande d'affichage agencé, en utilisation, pour fournir en sortie une représentation des utilisateurs d'une téléconférence à ladite pluralité de dispositifs d'interface (21, 22, 23, 24), le moyen de commande d'affichage répondant à une sortie reçue (51) du détecteur physique (50) dudit dispositif d'interface mobile pour effectuer un réglage correspondant de la représentation respective de l'utilisateur de la téléconférence en utilisant ledit dispositif d'interface mobile pour une sortie vers ladite pluralité de dispositifs d'interfaces.

13. Ensemble de téléconférence selon la revendication 12, dans lequel le moyen de commande d'affichage est agencé pour effectuer un réglage de la représentation respective afin d'indiquer si ledit utilisateur dudit dispositif d'interface mobile est en déplacement.

14. Ensemble de téléconférence selon la revendication 12, dans lequel le moyen de commande d'affichage est agencé pour effectuer un réglage de la représentation respective afin d'indiquer le degré de confidentialité laissé audit utilisateur dudit dispositif d'interface mobile.
